# EUROPÄISCHE PATENTSCHRIFT

(11) **EP 2 542 324 B1**
(45) Veröffentlichungstag und Bekanntmachung des Hinweises auf die Patenterteilung: **05.09.2018**
(21) Anmeldenummer: 11707591.1
(22) Anmeldetag: 02.03.2011
(51) Int. Cl.: B01D 35/15, B01D 35/16, B01D 36/00, B01D 29/23, B01D 29/58, B01D 35/30, F02M 37/22

(54) **FILTERVORRICHTUNG**
FILTER DEVICE
DISPOSITIF DE FILTRATION

(30) Priorität: 04.03.2010 DE 102010010304
(43) Veröffentlichungstag der Anmeldung: 09.01.2013
(73) Patentinhaber: HYDAC FILTERTECHNIK GMBH, 66280 Sulzbach/Saar (DE)
(72) Erfinder: EBERLE, Richard, 66399 ormesheim (DE); KREIBIG, Micha, 66780 Rehlingen-Siersburg (DE); DEWES, Markus, 66649 Oberthal (DE)
(74) Vertreter: Bartels und Partner, Patentanwälte
(86) Internationale Anmeldenummer: PCT/EP2011/001014
(87) Internationale Veröffentlichungsnummer: WO 2011/107265

(56) Entgegenhaltungen:
- DE-A1-102008 020 233
- US-A- 2 864 505
- US-A- 3 165 470
- US-A1- 2002 117 441

## Beschreibung

Die Erfindung betrifft eine Filtervorrichtung, insbesondere für mit Wasserbeimengungen belastete Fluide wie Dieselöl, mit den Merkmalen im Oberbegriff von Anspruch 1.

Filtervorrichtungen der oben genannten Art sind bekannt. Solche Filtervorrichtungen werden üblicherweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Wasseranteile zu schützen. Die Abscheidung von im Kraftstoff mitgeführten Wasseranteilen kann hierbei durch einen Koagulationsprozess bewirkt werden, bei dem an dem Filtermedium Wassertröpfchen gebildet werden, die aus dem im Filterelement gebildeten Abscheideraum zum Wassersammelraum abfließen können.

Um die Betriebssicherheit der dem Filter nachgeordneten Systeme zu gewährleisten, ist es wesentlich, dass bei den im Laufe der Betriebszeit erforderlichen Wechselvorgängen des Filterelementes, wobei jeweils beim Entkoppeln der Endkappe des verbrauchten Filterelementes von der Elementaufnahme die Fluidverbindung zwischen Reinseite des Filterelements und dem Fluidausgang des Gehäuses unterbrochen wird, keine Kontamination des Systems durch ein Abfallen von am verbrauchten Filterelement angelagerten Verschmutzungen stattfindet. Ferner ist eine getrennte, verlässliche Führung des jeweiligen Fluids von dem anfallenden Wasser wünschenswert, was die Betriebssicherheit erhöht.

Durch die US 3 165 470 gehört eine gattungsgemäße Koalisier- und Abscheidevorrichtung zum Stand der Technik. Zu reinigende Flüssigkeit strömt von oben in den Innenraum des Filterelements und fließt als gereinigte Flüssigkeit seitlich ab. Vom Kraftstoff nach Durchfließen eines Filtermediums an einem Koalisierer abgeschiedenes Wasser fließt durch Öffnungen in einer Bodenplatte und wird in einem Bodenteil der Vorrichtung gesammelt und kann von dort durch eine Öffnung abgelassen werden.

Aus der US 2002/0117441 A1 geht ebenfalls eine gattungsgemäße Filtervorrichtung hervor. Bei dieser Filtervorrichtung ist ein das Filtermedium umfassendes Oberteil auf ein einen Sammelbehälter für Wasser bildendes Unterteil aufsteckbar. Zum Anschluss der Fluidanschlüsse an das Filtermedium ist zwischen Oberteil und Unterteil ein Adapterteil vorgesehen, in dem zwei Fluidkanäle ausgebildet sind, die vom Fluideingang zur Rohseite des Filtermediums und von der Reinseite des Filtermediums zum Fluidausgang führen. Darüber hinaus sind in einer Bodenplatte Öffnungen vorgesehen, um koalisierte Wassertropfen in den Sammelbehälter abzuleiten.

Durch die DE 10 2008 020 233 A1 ist ein Kraftstofffiltersystem, insbesondere für Dieselmotoren, mit einem Filtergehäuse mit Kraftstoffeinlass und Kraftstoffauslass und einem zwischen Einlass und Auslass befindlichen, vom Kraftstoff durchströmbaren, wasserabscheidenden Filtermedium bekannt, wobei das Filtergehäuse für vom Filtermedium abgeschiedenes Wasser einen Sammelraum aufweist, aus dem Wasser über eine steuerbare Abgabeeinrichtung einer Wasseraufnahme- und Verdampfereinrichtung zuführbar ist, aus deren Abdampfausgang die Bestandteile des gebildeten Abdampfes an die Umgebung abgebbar sind, wobei die Wasseraufnahme- und Verdampfereinrichtung eine Ventilanordnung aufweist, mittels derer der Abdampfausgang in Abhängigkeit von einer unzulässigen Menge von in der Verdampfereinrichtung angesammelten, unverdampften Wassers verschließbar ist.

Im Hinblick auf diese Problematik stellt sich die Erfindung die Aufgabe, eine Filtervorrichtung der betrachteten Art zur Verfügung zu stellen, deren Bauweise ein Höchstmaß an Betriebssicherheit gewährleistet, sowie bei Wechselvorgängen die Gefahr einer Kontamination, insbesondere am Fluidausgang des Gehäuses, vermindert.

Erfindungsgemäß ist diese Aufgabe durch eine Filtervorrichtung gelöst, die die Merkmale des Patentanspruches 1 in seiner Gesamtheit aufweist.

Gemäß dem kennzeichnenden Teil des Anspruches 1 besteht eine wesentliche Besonderheit der Erfindung darin, dass das Adapterteil als Verbindungselement ausgebildet ist, über das das Filterelement an der Elementaufnahme festlegbar ist. Dadurch kann eine Endkappe als mit dem auszuwechselnden Filterelement verlorenes Bauteil in einfacher, kostengünstig herstellbarer Bauweise ausgebildet sein, während die Fluidführungseinrichtung mit den die getrennten Fluidwege bildenden Einrichtungen ein hiervon gesondertes, eigenes Bauteil in Form des Adapterteils bilden kann.

In der Fluidführungseinrichtung sind voneinander getrennte Fluidwege gebildet, von denen der erste Fluidweg vom Fluideingang des Gehäuses zu der Rohseite des Filterelementes führt und der zweite Fluidweg den jeweiligen Wasserdurchlass mit dem Wassersammelraum verbindet. Dergestalt ist eine sichere Trennung der in Rede stehenden Fluidwege über die Fluidführungseinrichtung geschaffen, so dass auch bei einer Entnahme eines verbrauchten Filterelements nebst Austausch gegen ein Neuelement keine Kontamination des Systems durch ein Abfallen von am verbrauchten Filterelement angelagerten Verschmutzungen in Richtung der Reinseite stattfindet, sondern vielmehr die dahingehenden Verschmutzungen auf der Rohseite verbleiben. Auch ist ein ungewollter Wassereintrag weder zu der Reinseite noch zu der Rohseite möglich.

Gegenüber den bekannten Filtervorrichtungen dieser Art, bei denen beim Filtervorgang das Filtermedium des Filterelements von seiner äußeren Rohseite her zum die Reinseite bildenden inneren Filterhohlraum hin durchströmt wird, veranlasst bei einer vorteilhaften Ausgestaltung der Erfindung die Fluidführungseinrichtung eine Art Strömungsumkehr, so dass das Filterelement vorzugsweise vom inneren Filterhohlraum her nach außen durchströmt wird. Dies verbessert die Situation beim Filterwechselvorgang entscheidend. Bei der Durchströmung des Filterelements von innen nach außen befindet sich die Rohseite im inneren Filterhohlraum, so dass rohseitig angelagerte Schmutzpartikel, die bei Herausnahme des Filterelements gegebenenfalls abfallen, in dem aufgetrennten Bereich des rohseitigen Fluidweges verbleiben, während sich der an der die Reinseite bildenden Außenseite des Filtermediums mündende Fluidausgang außerhalb des "gefährdeten" Bereiches befindet. Die Verschmutzungsgefahr des dem Fluidausgang nachgeordneten Systems ist dadurch wirksam vermieden.

In besonders vorteilhafter Weise ist die Anordnung so getroffen, dass die Rohseite durch den inneren Filterhohlraum des Filterelements gebildet ist und dass die Wasserabscheideeinrichtung mit ihrem zum Abscheidebereich hin offenen Wasserdurchlass Bestandteil des Filterelementes ist.

Der Wassersammelraum ist vorzugsweise so angeordnet, dass er sich an der tiefsten Stelle des Filtergehäuses an dieses anschließt, wobei sich die Elementaufnahme des Filtergehäuses oberhalb des Wassersammelraumes befindet.

Bei Ausführungsbeispielen, bei denen das Filterelement am unteren Ende eine Endkappe aufweist, die den in den Filterhohlraum führenden Durchgang und mindestens einen Wasserdurchlass aufweist, ist die Fluidführungseinrichtung mit der Endkappe in abgedichtete Fluidverbindung bringbar, was konstruktiv einen einfachen Aufbau ergibt.

Bei vorteilhaften Ausführungsbeispielen weist die bevorzugt kreisrunde Endkappe an ihrem Umfangsrand einen Ringkörper auf, der voneinander getrennte, sich in Axialrichtung erstreckende innere Ringmantelflächen bildet, an deren einer ein hydrophobes Sieb anliegt, das die Außenseite des Filtermediums in einem den Abscheidebereich bildenden radialen Abstand umgibt, und deren andere eine Dichtfläche für die fluiddichte Anlage eines umfänglichen Randteils des Adapterteils bildet.

Hinsichtlich der Gestaltung der Endkappe ist die Anordnung vorzugsweise so getroffen, dass die Endkappe zur Bildung des Durchganges ein Rohrstück aufweist, das sich von dem die Hauptebene der Endkappe definierenden, die Auflage für das Filtermedium bildenden Endkappenboden axial weg nach oben in den Filterhohlraum und axial nach unten für einen abgedichteten Eingriff in ein im Adapterteil befindliches Innenrohr erstreckt, das als Teil des ersten Fluidweges mit dem Fluideingang des Gehäuses in Fluidverbindung ist.

Bei besonders vorteilhaften Ausführungsbeispielen ist das Innenrohr des Adapterteils von einem Hülsenkörper umgeben, der an dem von der Endkappe abgewandten unteren Ende zum Wassersammelraum hin offen ist und das Innenrohr in einem Abstand umgibt, durch den ein Wasserkanal als Teil des zweiten Fluidweges gebildet ist.

Weiterhin kann das Adapterteil in vorteilhafter Weise so gestaltet sein, dass der Hülsenkörper des Adapterteils an seinem der Endkappe zugewandten Ende eine ebene Ringscheibe aufweist, die ohne Unterbrechung bis zu ihrem umfänglichen Randteil, das mit der zugeordneten Ringmantelfläche der Endkappe in abgedichtete Anlage bringbar ist, durchgehend ist und sich bei der Funktionsposition entlang des Endkappenbodens in einem Abstand erstreckt, durch den der Wasserkanal des Hülsenkörpers bis zum jeweiligen, im Endkappenboden gebildeten Wasserdurchlass fortgesetzt ist. Das als Fluidführungseinrichtung dienende Adapterteil bildet so zusammen mit der Unterseite des Endkappenbodens den zu dem jeweiligen Wasserdurchlass führenden Teil des zweiten Fluidweges, über den das im Abscheideraum angesammelte Wasser abströmt.

Die Elementaufnahme kann in vorteilhafter Weise einen die Verbindung zwischen Wassersammelraum und dem das Filterelement aufnehmenden Hauptteil des Gehäuses bildenden Rohrstutzen aufweisen, in dem der Hülsenkörper des Adapterteils aufnehmbar ist, um das betreffende Filterelement über seine mit dem Adapterteil in Dichtverbindung stehende Endkappe im Gehäuse festzulegen.

Für seine Funktion als Fluidführungseinrichtung kann das Adapterteil mit Vorteil so gestaltet sein, dass der Hülsenkörper an seiner Außenseite für die Anlage an der Innenseite des Rohrstutzens der Elementaufnahme zwei in einem axialen Abstand voneinander angeordnete, radial vorstehende Ringteile aufweist, durch die ein Ringraum zwischen der Außenseite des Hülsenkörpers und der Innenseite des Rohrstutzens der Elementaufnahme gebildet ist, wobei in den Ringraum ein zum Fluideingang des Gehäuses führender Zulaufkanal als Teil des ersten Fluidweges mündet.

Für den Verlauf dieses Fluidweges vom Innenrohr zum Fluideingang kann die Anordnung so getroffen sein, dass vom Innenrohr des Adapterteils ein Verbindungskanal abzweigt, der in den Ringraum an der Außenseite des Hülsenkörpers mündet und den ersten Fluidweg zum Fluideingang des Gehäuses hin fortsetzt.

Hinsichtlich der Abdichtung zwischen Endkappe des Filterelements, Adapterteil und Elementaufnahme kann die Abdichtung der Ringteile des Hülsenkörpers am Rohrstutzen der Elementaufnahme, des Rohrkörpers der Endkappe am Innenrohr des Adapterteils sowie des Randteils der Ringscheibe des Adapterteils an der Ringmantelfläche der Endkappe jeweils durch O-Ringe gebildet sein.

Durch die Abdichtung der Außenseite des Hülsenkörpers des Adapterteils gegenüber der Innenwand der Elementaufnahme ergibt sich der zusätzliche Vorteil, dass die sonst übliche Abdichtung des Außenumfanges der Endkappe gegenüber der Innenseite des Gehäuses in Wegfall kommt und stattdessen die Abdichtung zwischen Reinseite und Rohseite mit wesentlich kleinerem Dichtungsdurchmesser verwirklicht ist, wodurch sich verringerte Montagekräfte und dadurch eine Vereinfachung bei Einbau und Ausbau von Filterelementen ergeben.

Nachstehend ist die Erfindung anhand eines in der Zeichnung dargestellten Ausführungsbeispiels im Einzelnen erläutert. Es zeigen:
- Fig. 1: einen Längsschnitt des hier zu beschreibenden Ausführungsbeispiels der erfindungsgemäßen Filtervorrichtung; und

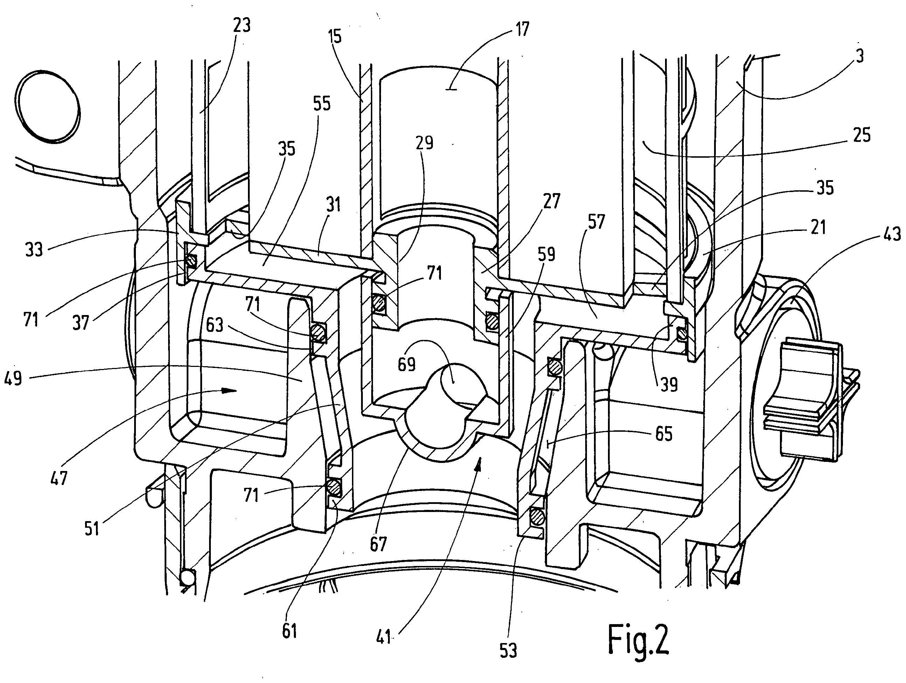

- Fig. 2: eine vergrößerte, in Längsrichtung aufgeschnitten gezeichnete perspektivische Schrägansicht lediglich des an die Fluidführungseinrichtung angrenzenden Teilbereiches des Ausführungsbeispieles.

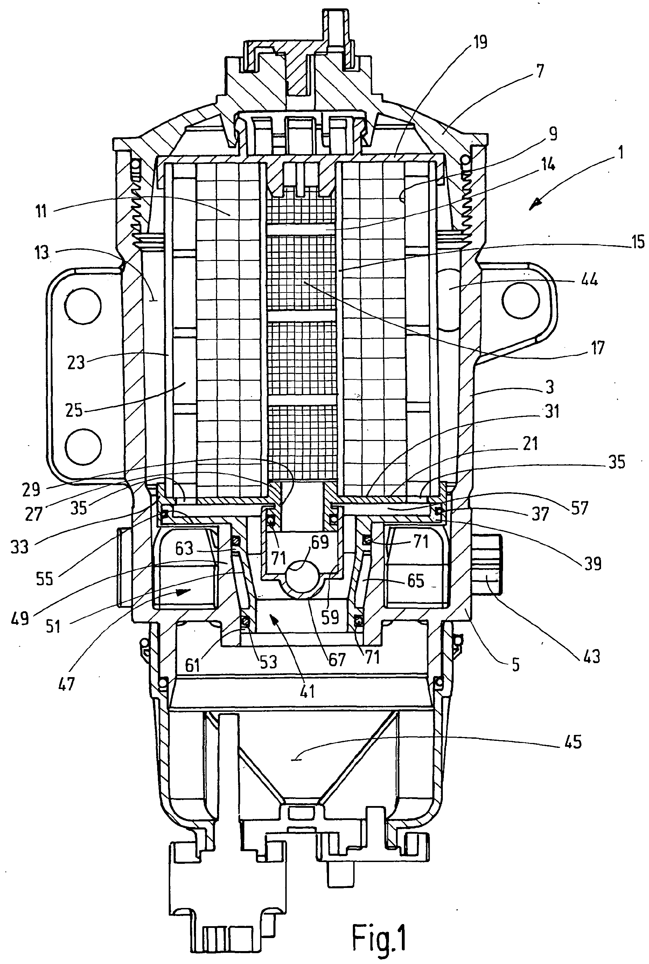

Die Vorrichtung weist ein Filtergehäuse 1 mit einem hohlzylinderförmigen Hauptteil 3 und einem sich an dessen Unterseite anschließenden Bodenteil 5 auf. Am oberen Ende ist mit dem Hauptteil 3 ein Gehäusedeckel 7 verschraubt, der für Einbau und Ausbau eines Filterelements 9 abnehmbar ist. Zwischen der Außenseite des im Gehäuse 1 aufgenommenen Filterelements 9 und der Innenwand des Gehäuses 1 befindet sich ein Zwischenraum, der beim Filtrationsvorgang die Reinseite 13 bildet. Ein von der Reinseite 13 aus dem Gehäuse 1 herausführender Fluidausgang für den Abstrom des abgereinigten Fluids ist in Fig. 1 mit 44 bezeichnet. Das Filtermedium 11 des Filterelements 9 ist durch eine zu einem Hohlzylinder geformte Filtermatte gebildet, die ein fluiddurchlässiges Stützrohr 15 umgibt, durch das ein innerer Filterhohlraum 17 gebildet ist, der beim Filtriervorgang die Rohseite 14 bildet, zu der das abzureinigende Fluid zuführbar ist, das das Filtermedium 11 von innen nach außen hin beim Filtriervorgang durchströmt.

In der bei Filterelementen üblichen Weise sind an dessen Enden Endkappen 19 und 21 vorgesehen, die Einfassungen für das Filtermedium 11 sowie das Stützrohr 15 bilden. Die Endkappen 19, 21 bilden darüber hinaus eine Einfassung für ein hydrophobes Sieb 23, das in Form eines Hohlzylinders die Außenseite des Filtermediums 11 in einem Abstand umgibt, durch den zwischen dem hydrophoben Sieb 23 und dem Filtermedium 11 ein Abscheidebereich 25 in Form eines Abscheideraums gebildet ist. Um eine Wasserabscheidung zu bewirken, wird, wie bei derartigen Kraftstofffiltern üblich, ein Filtermedium 11 benutzt, das für das von Kraftstoff mitgeführte Wasser koagulierend wirkt, so dass Wasser in Tröpfchenform aus dem Fluid ausfällt und im Abscheidebereich 25 absinkt, da das Sieb 23 für koagulierte Wassertopfen undurchlässig ist.

Die untere Endkappe 21, über die das im Gehäuse 1 in Funktionsposition befindliche Filterelement 9 im Gehäuse 1 festlegbar ist, ist derart ausgebildet, dass sie für den Filtrationsbetrieb mit einer Fluidführungseinrichtung zusammenwirkt. Zu diesem Zweck weist die Endkappe 21 ein Rohrstück 27 auf, das einen Durchgang 29 für den Zustrom von Fluid zum inneren Filterhohlraum 17 bildet. Das Rohrstück 27 erstreckt sich vom Endkappenboden 31, der eine ebene Auflagefläche für den unteren Rand des Filtermediums 11 bildet, sowohl axial nach oben in den Filterhohlraum 17 hinein als auch vom Endkappenboden 31 weg axial nach unten. Als äußeren Umfangsrand weist der Endkappenboden 31 einen Ringkörper 33 auf, und Lücken im Endkappenboden 31, die auf den Abscheidebereich 25 ausgerichtet sind, bilden Wasserdurchlässe 35 für den Wasseraustritt aus dem Abscheidebereich 25. Der Ringkörper 33 der Endkappe 21 ist so geformt, dass oberhalb und unterhalb des Endkappenbodens 31 innere Ringmantelflächen 37 gebildet sind, an deren oberer das hydrophobe Sieb 23 anliegt und deren untere Ringmantelfläche 37 eine Dichtfläche für die Zusammenwirkung mit einem umfänglichen Randteil 39 eines als Fluidführungseinrichtung dienenden Adapterteils 41 bildet.

Das Adapterteil 41 bildet in seiner Funktion als Fluidführungseinrichtung voneinander getrennte Fluidwege, von denen ein erster Fluidweg vom Fluideingang 43 des Gehäuses 1 über den Durchgang 29 zu dem die Rohseite 14 bildenden Filterhohlraum 17 führt, und der zweite Fluidweg über die Wasserdurchlässe 35 aus dem Abscheidebereich 25 heraus bis zum Wassersammelraum 45 im Gehäusebodenteil 5 führt. Anstelle eines eigenständigen Adapterteils 41 kann dessen Anschlussgeometrie auch einstückiger Bestandteil der unteren Endkappe 21 des Filterelements 9 sein.

Beim vorliegenden Beispiel weist die Elementaufnahme 47, an der das Filterelement 9 über das als Verbindungs- oder Zwischenelement dienende Adapterteil 41 festlegbar ist, einen Rohrstutzen 49 auf, der die einzige Verbindung zwischen dem das Filterelement 9 aufnehmenden Gehäusehauptteil 3 und dem Wassersammelraum 45 bildet. Das Adapterteil 41 weist einen in dem Rohrstutzen 49 aufnehmbaren Hülsenkörper 51 auf, der am unteren Ende 53 zum Wassersammelraum 45 offen ist und am oberen Ende in eine sich in einer Radialebene erstreckende Ringscheibe 55 übergeht, die an ihrem Umfangsrand das axial nach oben vorstehende Randteil 39 bildet, das mit der inneren Ringmantelfläche 37 des Ringkörpers 33 der Endkappe 21 in Dichtverbindung kommt. Auf diese Weise ist, von den Wasserdurchlässen 35 ausgehend, ein Wasserkanal 57 zwischen Endkappenboden 31 und Scheibe 55 des Adapterteils 41 gebildet, der sich entlang der Innenseite des Hülsenkörpers 51 bis zum Wassersammelraum 45 fortsetzt und den zweiten Fluidweg bildet.

Für die Bildung des ersten Fluidweges vom Fluideingang 43 des Gehäuses 1 über das Adapterteil 41 und den Durchgang 29 der Endkappe 31 in den inneren Filterhohlraum 17 weist das Adapterteil 41 ein Innenrohr 59 auf, das sich innerhalb des Hülsenkörpers 51 konzentrisch in einem Abstand von dessen Innenwand erstreckt, so dass ein Raum für den Wasserkanal 57 an der Außenseite des Innenrohres 59 freibleibt. Das Rohrstück 27 mit dem Durchgang 29 greift abdichtend in das Innenrohr 59 ein.

Der Hülsenkörper 51 weist in der Nähe seines unteren Endes und in der Nähe der oberen Ringscheibe 55 jeweils ein radial vorspringendes Ringteil 61 bzw. 63 auf, an denen jeweils die Abdichtung gegenüber der Innenwand des Rohrstutzens 49 der Elementaufnahme 47 erfolgt. Durch die radial vorstehenden Ringteile 61, 63 ist zwischen dem Rohrstutzen 49 und dem Hülsenkörper 51 ein Ringraum 65 gebildet, von dem ein in der Zeichnung nicht sichtbarer Zulaufkanal zum Fluideingang 43 führt, der den Eingangsteil des ersten Fluidweges bildet. Für die Fortsetzung dieses Fluidweges über das Innenrohr 59 des Adapterteils 41 bis zum die Rohseite 14 bildenden Filterhohlraum 17 ist ein vom geschlossenen Ende 67 des Innenrohres 59 abzweigender Verbindungskanal 69 vorgesehen, der in den Ringraum 65 führt, so dass sich der erste Fluidweg vom Fluideingang 43, den Ringraum 65 und den Verbindungskanal 69 des Innenrohres 59 bis zum Durchgang 29 der Endkappe 21 fortsetzt. Über den Verbindungskanal 69 und/oder über nicht näher dargestellte Verbindungsstege ist das Innenrohr 59 mit dem Hülsenkörper 51, vorzugsweise einstückig, verbunden.

Wie aus den Figuren ersichtlich, erfolgen die Abdichtungen der Ringteile 61, 63 des Hülsenkörpers 51 am Rohrstutzen 49 der Elementaufnahme 47 ebenso wie des Rohrstückes 27 der Endkappe 21 am Innenrohr 59 des Adapterteils 41 und ebenso des Randteils 39 der Ringscheibe 55 des Adapterteils 41 an der Ringmantelfläche 37 der Endkappe 21 jeweils durch O-Ringe 71. Bei der so gebildeten Abdichtung ist es nicht erforderlich, den Außenumfang der Endkappe 21 des Filterelements 9 gegenüber der Innenseite des Gehäuses 1 abzudichten.

Das Filterelement 9 weist das den inneren Filterhohlraum 17 umgebende Filtermedium 11 auf, das für den Filtriervorgang von dem jeweiligen zu filtrierenden Fluid durchströmbar ist, wobei an der Außenumfangsseite des Filtermediums 11 die Wasserabscheideeinrichtung 23 sowie der Abscheidebereich 25 für abgeschiedenes Wasser vorhanden sind. Der Abscheidebereich 25 weist mindestens einen Wasserdurchlass 35 auf, wobei ein die Fluidverbindung zum inneren Filterhohlraum 17 des Filterelements 9 bildender Durchgang 29 vorhanden ist. Ferner ist der Wasserdurchlass 35 vom Durchgang 29 innerhalb des Filterelements 9 mittels der adapterförmigen Fluidführungseinrichtung 41 getrennt.

Am unteren Ende des Filterelements 9 weist dieses die zur Aufnahme des Filtermediums 11 vorgesehene Endkappe 21 auf, die den in den inneren Filterhohlraum 17 führenden Durchgang 29 und den jeweiligen Wasserdurchlass 35 aufweist, wobei die Endkappe 21 mit der Fluidführungseinrichtung 41 in eine abgedichtete Fluidverbindung gebracht ist. Wird das derart vervollständigte Filterelement 9 nach Abschrauben des oberen Gehäusedeckels 7 aus dem Filtergehäuse 1 herausgeholt, beispielsweise um ein verbrauchtes Altelement gegen ein Neuelement zu tauschen, verbleiben die auf der Innenseite des Filtermediums 11 abgelagerten Partikelverschmutzungen sowie etwaige Reste von unfiltriertem Fluid auf der Rohseite 14 der Filtrieranordnung und des weiteren ist sichergestellt, dass im Abscheidebereich 25 noch vorhandenes abgeschiedenes Wasser über die jeweilige Durchlassstelle 35 weiter in Richtung des Wassersammelraumes 45 gelangt und insoweit auch nicht ungewollt auf die Rohseite 14 noch auf die Reinseite 13 kommt.

Der auf der Unterseite des Filtergehäuses 1 angeordnete Wassersammelraum 45 ist von einem Sammelgehäuse umgeben, das von unten her auf das Filtergehäuse 1 aufschraubbar ist. Das Sammelgehäuse besteht vorzugsweise aus einem durchsichtigen, topfartig geformten Kunststoff und, wie insbesondere die Darstellung nach der Fig.1 zeigt, ist auf der Unterseite des Sammelgehäuses mindestens eine Wasserentnahmeeinrichtung vorhanden, beispielsweise in Form einer üblichen Ablassschraube. Ist der Wassersammelraum 45 im Sammelgehäuse entsprechend gefüllt, kann dergestalt über die jeweilige Ablassschraube das Wasser aus der Vorrichtung abgeführt werden. Nach entsprechend neu eingewechseltem Filterelement 9 und zumindest bei maximalem Füllstand des Wassersammelraumes 45 entleertem Sammelgehäusebehälter steht die Filtervorrichtung für den weiteren Filtrierbetrieb dann erneut zur Verfügung.

## Patentansprüche

1. Filtervorrichtung, insbesondere für mit Wasserbeimengungen belastete Fluide wie Dieselöl, mit einem einen Fluideingang (43) und einen Fluidausgang (44) aufweisenden Filtergehäuse (1), in dem mindestens ein Filterelement (9) aufnehmbar ist, dessen einen inneren Filterhohlraum (17) umgebendes Filtermedium (11) beim Filtriervorgang von Rohseite (14) zu Reinseite (13) hin von dem jeweiligen Fluid durchströmbar ist, wobei an zumindest einer Seite des Filtermediums (11) eine Wasserabscheideeinrichtung (23) mit einem Abscheidebereich (25) für abgeschiedenes Wasser vorhanden ist, die über mindestens einen zum Abscheidebereich (25) hin offenen Wasserdurchlass (35) mit einem Wassersammelraum (45) verbunden ist, und das Filterelement (9) einen eine Fluidverbindung zum inneren Filterhohlraum (17) bildenden Durchgang (29) aufweist und an einer Elementaufnahme (47) des Filtergehäuses (1) festlegbar ist, wobei eine Fluidführungseinrichtung (41) vorhanden ist, in der voneinander getrennte Fluidwege gebildet sind, von denen der erste Fluidweg (59, 69) vom Fluideingang (43) des Gehäuses (1) zu der Rohseite (14) des Filterelements (9) führt und der zweite Fluidweg (57) den jeweiligen Wasserdurchlass (35) mit dem Wassersammelraum (45) verbindet, wobei die Fluidführungseinrichtung zur Bildung der getrennten Fluidwege (59, 69 und 57) ein Adapterteil (41) aufweist, **dadurch gekennzeichnet, dass** das Adapterteil (41) als Verbindungselement ausgebildet ist, über das das Filterelement (9) an der Elementaufnahme (47) festlegbar ist.

2. Filtervorrichtung nach Anspruch 1, **dadurch gekennzeichnet, dass** die Rohseite (14) durch den inneren Filterhohlraum (17) des Filterelements (9) gebildet ist.

3. Filtervorrichtung nach einem der vorhergehenden Ansprüche, **dadurch gekennzeichnet, dass** die Wasserabscheideeinrichtung (23) mit ihrem zum Abscheidebereich (25) hin offenen Wasserdurchlass (35) Bestandteil des Filterelements (9) ist.

4. Filtervorrichtung nach einem der vorhergehenden Ansprüche, **dadurch gekennzeichnet, dass** sich der Wassersammelraum (45) an der tiefsten Stelle des Filtergehäuses (1) an dieses anschließt und dass die Elementaufnahme (47) des Filtergehäuses (1) sich oberhalb des Wassersammelraumes (45) befindet.

5. Filtervorrichtung nach einem der vorhergehenden Ansprüche, **dadurch gekennzeichnet, dass** das Filterelement (9) am unteren Ende eine zur Aufnahme des Filtermediums (11) vorgesehene Endkappe (21) aufweist, die den in den Filterhohlraum (17) führenden Durchgang (29) und den mindestens einen Wasserdurchlass (35) aufweist, und dass die Fluidführungseinrichtung (41) mit der Endkappe (21) in eine abgedichtete Fluidverbindung bringbar ist.

6. Filtervorrichtung nach einem der vorhergehenden Ansprüche, **dadurch gekennzeichnet, dass** das Filterelement (9) mittels seiner Endkappe (21) über das Verbindungselement an der Elementaufnahme (47) festlegbar ist.

7. Filtervorrichtung nach Anspruch 5 oder 6, **dadurch gekennzeichnet, dass** die bevorzugt kreisrunde Endkappe (21) an ihrem Umfangsrand einen Ringkörper (33) aufweist, der voneinander getrennte, sich in Axialrichtung erstreckende innere Ringmantelflächen (37) bildet, an deren einer ein hydrophobes Sieb (23) anliegt, das die Außenseite des Filtermediums (11) in einem den Abscheidebereich (25) bildenden radialen Abstand umgibt, und deren andere eine Dichtfläche für die fluiddichte Anlage eines umfänglichen Randteils (39) des Adapterteils (41) bildet.

8. Filtervorrichtung nach einem der Ansprüche 5 bis 7, **dadurch gekennzeichnet, dass** die Endkappe (21) zur Bildung des Durchganges (29) ein Rohrstück (27) aufweist, das sich von dem die Hauptebene der Endkappe (21) definierenden, die Auflage für das Filtermedium (11) bildenden Endkappenboden (31) axial weg nach oben in den Filterhohlraum (17) und axial nach unten für einen abgedichteten Eingriff in ein im Adapterteil (41) befindliches Innenrohr (59) erstreckt, das als Teil des ersten Fluidweges (59, 69) mit dem Fluideingang (43) des Gehäuses (1) in Fluidverbindung ist.

9. Filtervorrichtung nach Anspruch 8, **dadurch gekennzeichnet, dass** das Innenrohr (59) des Adapterteils (41) von einem Hülsenkörper (51) umgeben ist, der an dem von der Endkappe (21) abgewandten unteren Ende zum Wassersammelraum (45) hin offen ist und das Innenrohr (59) in einem Abstand umgibt, durch den ein Wasserkanal als Teil des zweiten Fluidweges (57) gebildet ist.

10. Filtervorrichtung nach Anspruch 9, **dadurch gekennzeichnet, dass** der Hülsenkörper (51) des Adapterteils (41) an seinem der Endkappe (21) zugewandten Ende eine ebene Ringscheibe (55) aufweist, die ohne Unterbrechung bis zu ihrem umfänglichen Randteil (39), das mit der zugeordneten Ringmantelfläche (37) der Endkappe (21) in abgedichtete Anlage bringbar ist, durchgehend ist und sich bei der Funktionsposition entlang des Endkappenbodens (31) in einem Abstand erstreckt, durch den der Wasserkanal (57) des Hülsenkörpers (51) bis zum jeweiligen, im Endkappenboden (31) gebildeten Wasserdurchlass (35) fortgesetzt ist.

11. Filtervorrichtung nach Anspruch 9 oder 10, **dadurch gekennzeichnet, dass** die Elementaufnahme (47) einen die Verbindung zwischen Wassersammelraum (45) und dem das Filterelement (9) aufnehmenden Hauptteil (3) des Gehäuses (1) bildenden Rohrstutzen (49) aufweist, in dem der Hülsenkörper (51) aufnehmbar ist, um das betreffende Filterelement (9) über seine mit dem Adapterteil (41) in Dichtverbindung stehende Endkappe (21) im Gehäuse (1) festzulegen.

12. Filtervorrichtung nach einem der Ansprüche 9 bis 11, **dadurch gekennzeichnet, dass** der Hülsenkörper (51) an seiner Außenseite für die Anlage an der Innenseite des Rohrstutzens (49) der Elementaufnahme (47) zwei in einem axialen Abstand voneinander angeordnete, radial vorstehende Ringteile (61, 63) aufweist, durch die ein Ringraum (65) zwischen Außenseite des Hülsenkörpers (51) und Innenseite des Rohrstutzens (49) der Elementaufnahme (47) gebildet ist, und dass in den Ringraum (65) ein zum Fluideingang (43) des Gehäuses (1) führender Zulaufkanal als Teil des ersten Fluidweges (59, 69) mündet.

13. Filtervorrichtung nach einem der Ansprüche 8 bis 12, **dadurch gekennzeichnet, dass** vom Innenrohr (59) des Adapterteils (41) ein Verbindungskanal (69) abzweigt, der in den Ringraum (65) an der Außenseite des Hülsenkörpers (51) mündet.

14. Filtervorrichtung nach einem der Ansprüche 8 bis 13, **dadurch gekennzeichnet, dass** die Abdichtung der Ringteile (61, 63) des Hülsenkörpers (51) am Rohrstutzen (49) der Elementaufnahme (47), des Rohrstückes (27) der Endkappe (21) am Innenrohr (59) des Adapterteils (41) sowie des Randteils (39) der Ringscheibe (55) des Adapterteils (41) an der Ringmantelfläche (37) der Endkappe (21) jeweils durch O-Ringe (71) gebildet ist.

## Claims

1. Filter device for fluids contaminated with water additions, such as diesel oil, with a filter housing (1) having a fluid inlet (43) and a fluid outlet (44), in which at least one filter element (9) can be accommodated, in which the respective fluid can flow through a filter medium (11) surrounding an inner filter cavity (17) from contaminated side (14) to uncontaminated side (13) during the filtration procedure (11), wherein on at least one side of the filter medium (11) a water separation device (23) with a separation section (25) for separated water is provided, which is connected by means of a water passage (35), open to the separation section (25) to a water collection chamber (45), and the filterelement (9) has a passage (29) forming a fluid connection to the inner filter cavity (17) and can be secured on an element mounting (47) of the filter housing (1) wherein a fluid guidance device (41) is provided, in which fluid paths, separated from one another, are formed, of which the first fluid path (59, 69) leads from the fluid inlet (43) of the housing (1) to the contaminated side (14) of the filter element (9) and the second fluid path (57) connects the respective water passage (35) to the water collection chamber (45), wherein the fluid guidance device has an adapter part for formation of the separate fluid paths (59, 69 and 57), **characterised in that** the adapter part (41) is configured as a connection element, by means of which the the filter element (9) can be secured on the element mounting (47).

2. Filter device in accordance with claim 1, **characterised in that** the uncontaminated side (14) is formed by the inner filter cavity (17) of the filter element (9).

3. Filter device in accordance with one of the preceding claims, **characterised in that** the water separation device (23), with its water passage (35) open to the separation section (25), is a constituent part of the filter element (9).

4. Filter device in accordance with one of the preceding claims, **characterised in that** the water collection chamber (45) at the lowest position of the filter housing (1) connects to this and that the element mounting (47) of the filter housing (1) is positioned above the water collection chamber (45).

5. Filter device in accordance with one of the preceding claims, **characterised in that** the filter element (9) has an end cap (21) provided at the lower end to receive the filter medium (11), which has the passage (29) leading to the filter cavity (17), and has the at least one water passage (35), and that the fluid guidance device (41) can be incorporated with the end cap (21) to form a sealed fluid connection.

6. Filter device in accordance with one of the preceding claims, **characterised in that** the filter element (9) can be secured to the element mounting (47) by means of its end cap (21), using the connection member.

7. Filter device in accordance with claim 5 or 6, **characterised in that** the preferably circular end cap (21) has an annular body (33) at its peripheral edge, which forms inner circumferential surfaces (37) extending in an axial direction, separate from one another, to one of which a hydrophobic sieve (23) attaches and that the outside of the filter medium (11) surrounds at a radial distance to form the separation section (25), and whose other forms a sealing surface for the fluid-tight attachment of a circumferential edge portion (39) of the adapter part (41).

8. Filter device in accordance with one of the claims 5 to 7, **characterised in that** the end cap (21) has a tubular piece (27) to form the passage (29), that extends from the end cap base (31), forming the support for the filter medium (11) and defining the principal plane of the end cap (21), axially upwards into the filter cavity (17) and axially downwards for a sealed engagement in an inner tube (59) located in the adaptor part (41) that is in a fluid connection as part of the first fluid route (59, 69) with the fluid inlet (43) of the housing (1).

9. Filter device in accordance with claim 8, **characterised in that** the inner tube (59) of the adapter part (41) is surrounded by a sleeve body (51), which is open at the lower end remote from the end cap (21) to the water collection chamber (45) and surrounds the inside tube (59) at a distance, through which a water channel is formed as part of the second fluid route (57).

10. Filter device in accordance with claim 9, **characterised in that** the sleeve body (51) of the adapter part (41), has a flat annular disc (55) at its end facing the end cap (21), which is continuous without interruption up to its circumferential edge part (39), which can be brought into sealed attachment with the associated annular jacket surface (37) of the end cap (21), and is extended at a distance in the functional position along the base of the end cap body (31), through which the water channel (57) of the sleeve body (51) is continued up to the respective water passage (35) formed in the end cap base (31).

11. Filter device in accordance with claim 9 or 10, **characterised in that** the element mounting (47) has a tubular connection piece (49) forming the connection between water collection chamber (45) and the body (3) of the housing (1), in which the sleeve body (51) can be mounted, in order to secure the filter element (9) concerned in the housing (1) by means of its end cap (21) in a sealed connection with the adapter part (41).

12. Filter device in accordance with one of the claims 9 to 11, **characterised in that** the sleeve body (51), for attachment to the inside of the tube connector (49) of the element mounting (47), has on its outside two radially projecting annular parts (61, 63), arranged at an axial distance from one another, by which an annular space (65) is formed between the outside of the sleeve body (51) and the inside of the tubular connector (49) of the element mounting (47), and that an inlet channel leading to the fluid inlet (43) of the housing (1) opens into the annular space (65) as part of the first fluid path (59, 69).

13. Filter device in accordance with one of the claims 8 to 12, **characterised in that** a connecting channel (69) branches off from the inside tube (59) of the adapter part (41), which opens into the annular space (65) at the outside of the sleeve body (51).

14. Filter device in accordance with one of the claims 8 to 13, **characterised in that** the seal of the annular parts (61, 63) of the sleeve body (51) on the tube connector (49) of the element mounting (47), of the tube connector (27), of the end cap (21), on the inner tube (59) of the adapter part (41) as well as the edge portion (39) of the annular disc (55) of the adapter part (41), on the inner circumferential surface (37) of the end cap (21), is formed in each case by O-rings (71).

## Revendications

1. Dispositif de filtration, notamment pour des fluides, comme de l'huile diesel chargés d'additions d'eau, comprenant une enveloppe (1) de filtre, qui a une entrée (43) pour du fluide et une sortie (44) pour du fluide, et dans laquelle peut être logé au moins un élément (9) filtrant, dont le milieu (11) filtrant, entourant une cavité (17) intérieure de filtre, peut être traversé lors de l'opération de filtration, du côté (14) brut au côté (13) propre par le fluide respectif, dans lequel il y a au moins, d'un côté du milieu (11) filtrant, un dispositif (23) de séparation d'eau ayant une région (25) de séparation pour l'eau séparée, dispositif qui communique avec un espace (45) collecteur d'eau par au moins un passage (35) pour de l'eau ouvert vers la région (25) de séparation, et l'élément (9) filtrant a un passage (29) formant une liaison fluidique vers la cavité (17) intérieure du filtre et peut être fixé à un logement (47) d'élément de l'enveloppe (1) du filtre, dans lequel il y a un dispositif (41) de conduite de fluide, dans lequel sont formés des trajets de fluide séparés l'un de l'autre, dont le premier trajet (59, 69) pour du fluide va de l'entrée (43) pour du fluide de l'enveloppe (1) au côté (14) brut de l'élément (9) filtrant et le deuxième trajet (57) pour du fluide met le passage (35) pour de l'eau en communication avec l'espace (45) collecteur d'eau, le dispositif de conduite de fluide ayant une partie (41) formant adaptateur pour former les trajets (59, 69 et 57) de fluide séparés, **caractérisé en ce que** la partie (41) formant adaptateur est constituée sous la forme d'un élément de liaison, par lequel l'élément (9) filtrant peut être fixé au logement (47) d'élément.

2. Dispositif de filtration suivant la revendication 1, **caractérisé en ce que** le côté (14) brut est formé par la cavité (17) intérieure de filtre de l'élément (9) filtrant.

3. Dispositif de filtration suivant l'une des revendications précédentes, **caractérisé en ce que** le dispositif (23) de séparation d'eau fait, par sa traversée (35) d'eau ouverte vers la région (25) de séparation, partie de l'élément (9) filtrant.

4. Dispositif de filtration suivant l'une des revendications précédentes, **caractérisé en ce que** l'espace (45) collecteur d'eau se raccorde au point le plus profond de l'enveloppe (1) du filtre à celle-ci et **en ce que** le logement (47) d'élément de l'enveloppe (1) du filtre se trouve au-dessus de l'espace (45) collecteur d'eau.

5. Dispositif de filtration suivant l'une des revendications précédentes, **caractérisé en ce que** l'élément (9) filtrant a, à l'extrémité inférieure, une coiffe (21) d'extrémité, qui est prévue pour recevoir le milieu (11) filtrant et qui a le passage (29) menant à la cavité (17) du filtre et le au moins un passage (35) pour de l'eau, et **en ce que** le dispositif (41) de conduite de fluide peut être mis en liaison fluidique d'une manière étanche avec la coiffe (21) d'extrémité.

6. Dispositif de filtration suivant l'une des revendications précédentes, **caractérisé en ce que** l'élément (9) filtrant peut être fixé au logement (47) d'élément, au moyen de la coiffe (21) d'extrémité, par l'intermédiaire de l'élément de liaison.

7. Dispositif de filtration suivant la revendication 5 ou 6, **caractérisé en ce que** la coiffe (21) d'extrémité, de préférence circulaire, a, sur son bord de pourtour, un corps (33) annulaire, qui forme des surfaces (37) de chemisage annulaires intérieures s'étendant séparément l'une de l'autre dans la direction axiale, à l'une desquelles s'applique un tamis (23) hydrophobe, qui entoure le côté extérieur du milieu en filtrant à une distance radiale formant la région (25) de séparation, et dont l'autre forme une surface d'étanchéité pour l'application d'une manière étanche au fluide d'une partie (9) de bord faisant le tour de la partie (41) formant adaptateur.

8. Dispositif de filtration suivant l'une des revendications 5 à 7, **caractérisé en ce que** la coiffe (21) d'extrémité a, pour former le passage (29), une pièce (27) tubulaire qui, en s'éloignant axialement vers le haut dans la cavité (17) du filtre et axialement vers le bas du fond (31) de la coiffe d'extrémité, définissant le plan principal de la coiffe (21) d'extrémité et formant le support du milieu (11) filtrant, s'étend, pour une pénétration d'une manière étanche, dans un tube (59) intérieur se trouvant dans la partie (41) formant adaptateur, tube qui est en liaison fluidique comme partie du premier trajet (59, 69) pour du fluide avec l'entrée (43) pour du fluide de l'enveloppe (1).

9. Dispositif de filtration suivant la revendication 8, **caractérisé en ce que** le tube (59) intérieur de la partie (41) formant adaptateur est entouré d'un corps (51) formant douille, qui, à l'extrémité inférieure loin de la coiffe (21) d'extrémité, est ouvert vers l'espace (45) collecteur d'eau et entoure le tube intérieur à une distance par laquelle il est formé un canal pour de l'eau comme partie du deuxième trajet (57) pour du fluide.

10. Dispositif de filtration suivant la revendication 9, **caractérisé en ce que** le corps (51) formant douille de la partie (41) formant adaptateur a, à son extrémité tournée vers la coiffe (21) d'extrémité, un disque (55) annulaire plan qui, sans interruption jusqu'à sa partie (39) de bord faisant le tour et pouvant être mise en contact de façon étanche avec la surface (37) de chemisage annulaire associée de la coiffe (21) d'extrémité, est continu et s'étend en la position de fonctionnement le long du fond (31) de la coiffe d'extrémité à une distance, par laquelle le canal (57) pour de l'eau du corps (51) formant douille est prolongé jusqu'à la traversée (35) pour de l'eau formée dans le fond (31) de la coiffe d'extrémité.

11. Dispositif de filtration suivant la revendication 9 ou 10, **caractérisé en ce que** le logement (47) d'élément a une tubulure (49) formant la liaison entre l'espace (45) collecteur d'eau et la partie (3) principale de l'enveloppe (1) recevant l'élément (9) filtrant, tubulure dans laquelle peut être reçu le corps (51) formant douille pour fixer l'élément (9) filtrant concerné dans l'enveloppe (1) par sa coiffe (21) d'extrémité en liaison étanche avec la partie (41) formant adaptateur.

12. Dispositif de filtration suivant l'une des revendications 9 à 11, **caractérisé en ce que** le corps (51) formant douille a, sur son côté extérieur pour l'application sur le côté intérieur de la tubulure (49) du logement (47) d'élément, deux parties (61, 63) annulaires en saillie radialement disposées à distance axiale l'une de l'autre, par lesquelles un espace (65) annulaire est formé entre le côté extérieur du corps (51) formant douille et le côté intérieur de la tubulure (49) du logement (47) d'élément, et **en ce que**, dans l'espace (65) annulaire, débouche comme partie du premier trajet (59, 69) pour du fluide, un canal d'arrivée menant à l'entrée (43) pour du fluide de l'enveloppe (1).

13. Dispositif de filtration suivant l'une des revendications 8 à 12, **caractérisé en ce que** du tube (59) intérieur de la partie (41) formant adaptateur bifurque un canal (69) de liaison, qui débouche dans l'espace (65) annulaire du côté extérieur du corps (51) formant douille.

14. Dispositif de filtration suivant l'une des revendications 8 à 13, **caractérisé en ce que** l'étanchéité des parties (61, 63) annulaires du corps (51) formant douille sur la tubulure (49) du logement (47) d'élément, de la tubulure (27) de la coiffe (21) d'extrémité au tube (59) intérieur de la partie (41) formant adaptateur, ainsi que de la partie (39) de bord du disque (55) annulaire de la partie (41) d'adaptateur sur la surface (37) de chemisage annulaire de la coiffe (21) d'extrémité, sont formées chacune par des joints (71) toriques.
